# EUROPÄISCHE PATENTSCHRIFT

(11) **EP 2 392 490 B1**
(45) Veröffentlichungstag und Bekanntmachung des Hinweises auf die Patenterteilung: **10.07.2013**
(21) Anmeldenummer: 11401512.6
(22) Anmeldetag: 10.05.2011
(51) Int. Cl.: B60N 3/00, B60N 3/10

(54) **Halter für einen Getränkebehälter**
Holder for a drinks container
Support de réservoir de boissons

(30) Priorität: 07.06.2010 DE 102010017249
(43) Veröffentlichungstag der Anmeldung: 07.12.2011
(73) Patentinhaber: fischer automotive systems GmbH & Co. KG, 72160 Horb (DE)
(72) Erfinder: Kämmer, Hartwig, 72178 Waldachtal (DE)

(56) Entgegenhaltungen:
- EP-A2- 1 366 952
- WO-A1-96/33903
- DE-A1- 19 529 877
- DE-U1-202004 000 618
- DE-U1-202004 010 973
- DE-U1-202010 006 665
- US-A- 3 814 367
- US-A- 5 114 108

## Beschreibung

Die Erfindung betrifft einen Halter für einen Getränkebehälter mit den Merkmalen des Oberbegriffs des Anspruchs 1. Derartige Halter, wie z.B. aus der DE 195 29 877 A1 bekannt, dienen zum Halten von Getränkebehältern wie beispielsweise Getränkedosen, Bechern, Tassen oder Flaschen in Fahrzeugen, insbesondere Kraftfahrzeugen.

Ein weiterer Halter ist bekannt aus der europäischen Patentanmeldung EP 1 366 952 A2. Dieser bekannte Halter weist eine napfförmige Behälteraufnahme auf, die zum Einstellen eines Getränkebehälters oben offen ist. Dabei bezieht sich die Raumrichtung "oben" auf eine vorgesehene Einbaulage des Halters. Der bekannte Halter weist Haltebacken an seinem Umfang auf, die durch Öffnungen in einer Umfangswand der Behälteraufnahme in die Behälteraufnahme hineinragen. Die Haltebacken werden federnd in die Behälteraufnahme hinein beaufschlagt und sind entgegen der Federbeaufschlagung nach außen wegdrückbar. Beim Einstellen in die Behälteraufnahme drückt ein Getränkebehälter die Haltebacken nach außen, die durch ihre Federbeaufschlagung federnd außen am Umfang des in die Behälteraufnahme eingestellten Getränkebehälters anliegen. Die federbeaufschlagten Haltebacken erhöhen eine Kippsicherheit des in die Behälteraufnahme eingestellten Getränkebehälters und passen sich durch das Federn selbsttätig an einen Durchmesser des Getränkebehälters an. Das Wort ,,Haltebacke" ist allgemein im Sinne eines federnd in die Behälteraufnahme hinein beaufschlagten Elements zu verstehen, das seitlich an einem eingestellten Getränkebehälter anliegt, um dessen Halt und Kippsicherheit in der Behälteraufnahme zu erhöhen.

Die Haltebacken des bekannten Halters sind an freien, oberen Enden von Federelementen vorgesehen, die die Form von Blattfedern aufweisen und auf einer Außenseite der Umfangswand der Behälteraufnahme nach oben ragen. Die Federelemente des bekannten Halters sind unterhalb eines Bodens der Behälteraufnahme abgewinkelt, einstückig miteinander und an der Unterseite des Bodens befestigt.

Aufgabe der Erfindung ist, einen Halter für einen Getränkebehälter der eingangs erläuterten Art vorzuschlagen, der aus wenigen Einzelteile besteht, die einfach herstellbar und zusammenbaubar sind.

Diese Aufgabe wird erfindungsgemäß durch die Merkmale des Anspruchs 1 gelöst. Der erfindungsgemäße Halter weist einen Boden auf, der an der Behälteraufnahme angeordnet ist. Der Boden bildet eine Stellfläche für einen in die Behälteraufnahme eingestellten Getränkebehälter. Die Erfindung schließt nicht aus, dass die Behälteraufnahme einen weiteren Boden aufweist, auf dem der eine Boden aufliegt oder die sich zu einer Fläche ergänzen. Die mindestens eine Haltebacke ist einstückig mit dem Boden, so dass der erfindungsgemäße Halter im einfachsten Fall aus zwei Teilen, nämlich der Behälteraufnahme und dem Boden mit der mindestens einen, federnden Haltebacke besteht. Der Zusammenbau kann durch einfaches Einlegen oder Einbringen des Bodens in die Behälteraufnahme erfolgen.

Erfindungsgemäß ist der Boden lösbar an der Behälteraufnahme angeordnet. Dies ermöglicht neben der einfachen Montage auch, dass der Boden beispielsweise zur Reinigung aus der Behälteraufnahme des erfindungsgemäßen Halters entnehmbar ist.

Vorzugsweise weist der erfindungsgemäße Halter mehrere federnde Haltebacken auf, die gleich oder ungleichmäßig über den Umfang der Behälteraufnahme verteilt angeordnet sind.

Eine bevorzugte Ausgestaltung der Erfindung sieht vor, dass der von der Behälteraufnahme lösbare Boden eine Tropfwanne aufweist, beispielsweise als Tropfwanne mit einem nach oben stehenden Umfangsrand ausgebildet ist. Dabei ist der Begriff "Tropfwanne" allgemein im Sinne eines Auffangelements für aus dem Getränkebehälter austretende und in die Behälteraufnahme gelangende Flüssigkeit zu verstehen. Insbesondere bei Entnehmbarkeit des Bodens aus der Behälteraufnahme ist eine einfache Reinigungsmöglichkeit gegeben.

Eine Ausgestaltung der Erfindung sieht vor, dass die mindestens eine Haltebacke ein Federelement aufweist, das in einem Umfangsbereich der Behälteraufnahme vom Boden nach oben steht. Das Federelement ist einstückig mit dem Boden und die Haltebacke ist einstückig mit dem Federelement. Diese Ausgestaltung der Erfindung ermöglicht eine einfache Herstellung des Bodens mit einem oder mehreren Federelementen mit jeweils einer Haltebacke in einem Stück, beispielsweise aus Blech als Stanz- und Biegeteil, oder aus Kunststoff, beispielsweise durch Spritzgießen. Der Zusammenbau mit der Behälteraufnahme des Halters erfolgt durch einfaches Einsetzen des Bodens mit dem oder den Federelementen und Haltebacken in die Behälteraufnahme.

Eine Ausgestaltung der Erfindung sieht vor, dass das Federelement sich nach außen an der Behälteraufnahme abstützt. Durch die Abstützung nach bzw. von außen ist eine gute, federnde Anlage der Haltebacke von außen am Umfang eines in die Behälteraufnahme eingestellten Getränkebehälters möglich.

Eine Ausgestaltung der Erfindung sieht einen federnden Bogen als Federelement vor. Der federnde Bogen kann beispielsweise die Form einer gekrümmten Blattfeder aufweisen. Diese Ausgestaltung der Erfindung ermöglicht ein einfaches, an die Erfindung angepasstes Federelement.

Die Erfindung wird nachfolgend anhand eines in der Zeichnung dargestellten Ausführungsbeispiels näher erläutert. Es zeigen:
- Figur 1: einen erfindungsgemäßen Halter mit einem eingestellten Getränkebehälter in perspektivischer Darstellung schräg von oben;
- Figur 2: den Halter aus Figur 1 ohne Getränkebehälter;

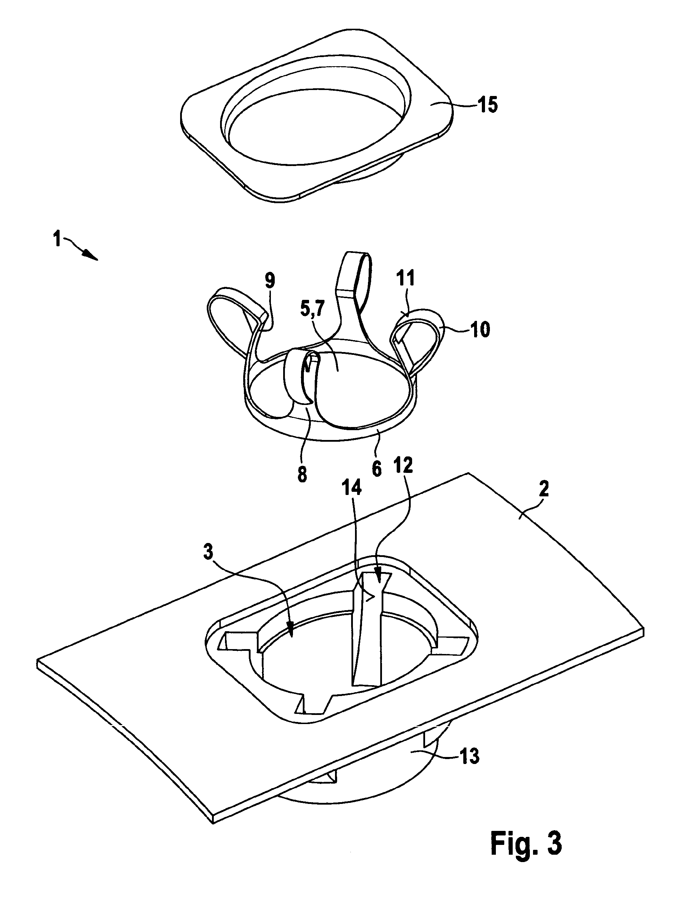

- Figur 3: Einzelteile des Halters aus Figuren 1 und 2 in Explosionsdarstellung; und

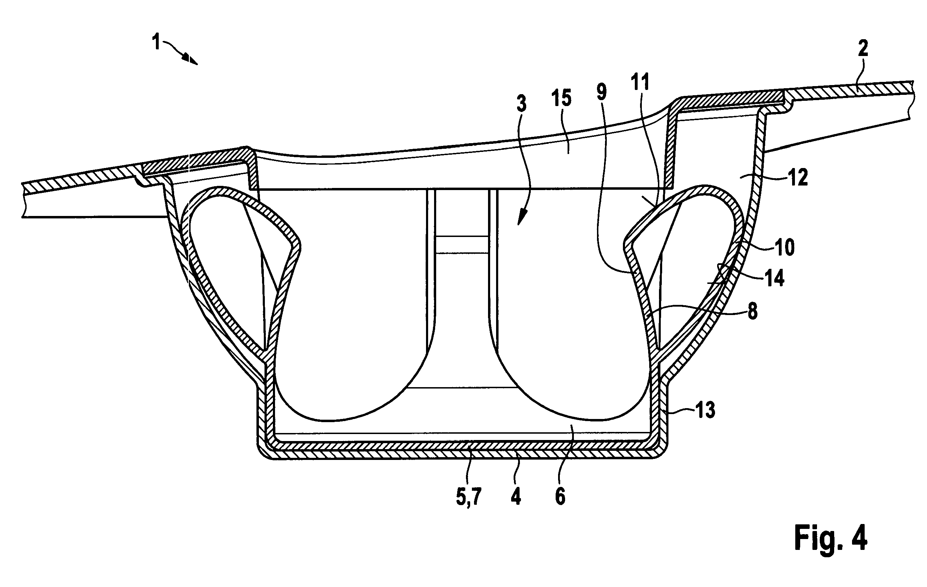

- Figur 4: einen Achsschnitt des Halters aus Figuren 1-3.

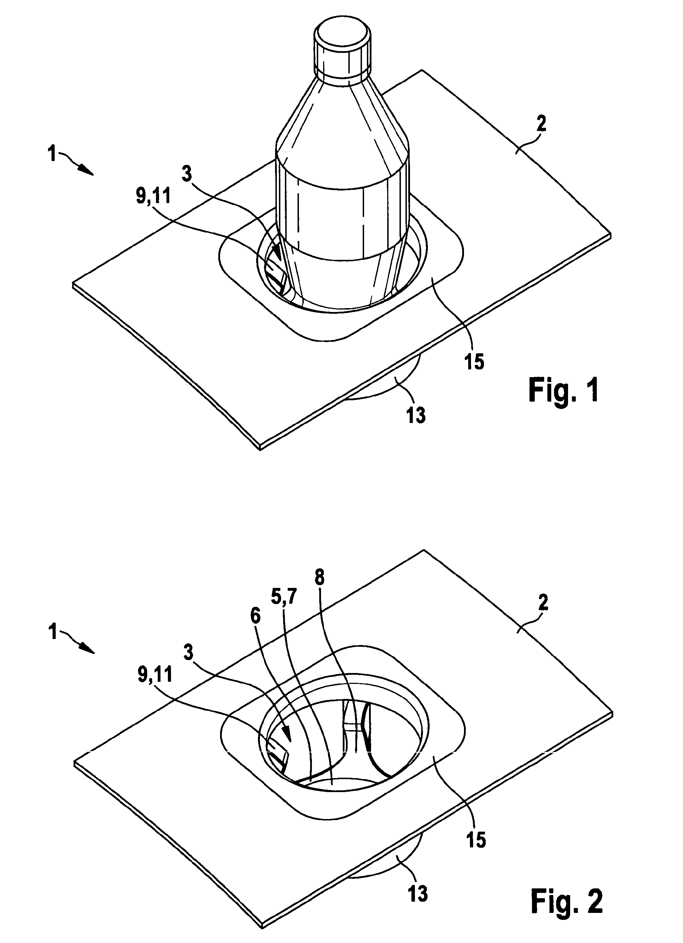

Der in der Zeichnung dargestellte, erfindungsgemäße Halter 1 ist zum Einstellen und kippsicheren Halten eines Getränkebehälters in einem Kraftwagen vorgesehen. Der Getränkebehälter kann wie in Figur 1 gezeichnet eine Flasche, ein Becher, eine Tasse oder eine Getränkedose (nicht dargestellt) sein. Der Halter 1 ist in eine in etwa horizontale Fläche, beispielsweise in eine Mittelkonsole 2 eines im übrigen nicht dargestellten Kraftwagens eingebaut. Von der Mittelkonsole 2 ist ein Bruchstück ihrer in etwa horizontalen Oberseite gezeichnet. Im Ausführungsbeispiel weist die Mittelkonsole 2 eine napfförmige, zylindrische Vertiefung auf, die eine Behälteraufnahme 3 bildet. Anders als dargestellt kann die Behälteraufnahme 3 auch als separates Bauteil in die Mittelkonsole 2 eingebaut sein. Die Behälteraufnahme 3 ist oben offen und weist unten einen Boden 4 auf.

Auf dem Boden 4 liegt ein weiterer Boden 5 auf, der nachfolgend als lösbarer Boden 5 bezeichnet wird. Zur Unterscheidung wird der Boden 4, der mit der Behälteraufnahme 3 einstückig ist, als fester Boden 4 bezeichnet. Der lösbare Boden 5 liegt auf dem festen Boden 4 auf und liegt in der Behälteraufnahme 3 ein. Er ist aus der Behälteraufnahme 3 entnehmbar, weswegen er als lösbar bezeichnet wird. Der lösbare Boden 5 weist einen umlaufenden, nach oben stehenden Rand 6 auf, wodurch er als Tropfwanne 7 ausgebildet ist. Der als Tropfwanne 7 ausgebildete lösbare Boden 5 fängt aus einem Getränkebehälter austretende und in die Behälteraufnahme 3 gelangende Flüssigkeit auf. Da der lösbare Boden 5 einfach aus der Behälteraufnahme 3 entnehmbar ist, lässt er sich leicht reinigen.

Der lösbare Boden 5 weist vier mit ihm einstückige, nach oben stehende Federelemente 8 auf, die um jeweils 90° in Umfangsrichtung versetzt zueinander angeordnet sind. Die Federelemente 8 weisen die Form nach innen gewölbter Blattfedern auf. Ihre freien, oberen Enden bilden nach innen in die Behälteraufnahme 3 federnde Haltebacken 9, die gegen eine Federkraft der Federelemente 8 nach außen wegdrückbar sind. An ihren freien, oberen Enden weisen die Federelemente 8 nach außen stehende, federnde Bögen 10 auf, die ungefähr in halber Höhe der blattförmigen Federelemente 8 wieder in diese übergehen. Die federnden Bögen 10 sind einstückig mit den Federelementen 8. Oberseiten der federnden Bögen 10 verlaufen von den freien, oberen Enden der Federelemente 8 ausgehend schräg nach oben und in Bezug zur Behälteraufnahme 3 nach außen. Die schräg nach oben/außen verlaufenden Oberseiten bilden Abdrückflächen 11 zum Wegdrücken der Haltebacken 9 nach außen.

Die federnden Bögen 10 liegen in Nuten 12 ein, die von einer Umfangswand 13 der Behälteraufnahme 3 nach außen abstehen. Die Nuten 12 weisen einen rechteckigen Querschnitt auf, sind nach innen zur Behälteraufnahme 3 offen und weisen einen bögenförmig nach außen/oben verlaufenden Nutgrund 14 auf. Die federnden Bögen 10 stützen sich nach außen am Nutgrund 14 ab, wodurch sich eine Federkraft der Federelemente 8 erhöht. Die Nuten 12 führen die federnden Bögen 10 und über diese die Federelemente 8 mit den Haltebacken 9 in seitlicher Richtung, so dass die Federelemente 8 mit den Haltebacken 9 sich im Wesentlichen nur radial zur Behälteraufnahme 3 federnd bewegen können und gegen eine Bewegung in tangentialer Richtung der Behälteraufnahme 3 abgestützt sind.

Auf die offene Oberseite der Behälteraufnahme 3 ist eine ringförmige Blende 15 aufgesetzt, deren Loch so groß wie ein Durchmesser der Behälteraufnahme 3 ist und die nach außen bündig zur Oberseite der Mittelkonsole 2 abschließt. Die Blende 15 deckt die oben offenen Nuten 12 auf der Oberseite ab.

Beim Einstellen eines Getränkebehälters, beispielsweise der in Figur 1 gezeichneten Flasche, in den erfindungsgemäßen Halter 1, gelangt ein Flaschenboden auf die schräg nach außen/oben verlaufenden Abdrückflächen 11 der Haltebacken 9 und Federelemente 8. Der Flaschenboden drückt die Haltebacken 9 gegen die Federkraft der Federelemente 8 und der sich nach außen an den Nutgründen 14 abstützenden federnden Bögen 10 nach außen weg, so dass die Flasche in die Behälteraufnahme 3 einstellbar ist. Die Federelemente 8 und die federnden Bögen 10 drücken die Haltebacken 9 nach innen, d. h. von außen gegen die eingestellte Flasche, so dass diese kippsicher in der Behälteraufnahme 3 des Halters 1 gehalten ist.

Nach Abnehmen der Blende 15 lässt sich der lösbare Boden 5 zusammen mit den Federelementen 8, den Haltebacken 9 und den federnden Bögen 10, die einstückige Bestandteile des lösbaren Bodens 5 sind, aus der Behälteraufnahme 3 entnehmen und beispielsweise von Flüssigkeit reinigen, die in die Behälteraufnahme 3 gelangt ist. Wie weiter oben beschrieben ist der lösbare Boden 5 als Tropfwanne 7 ausgebildet und fängt solche, in die Behälteraufnahme 3 gelangende Flüssigkeit auf.

Alternativ könnte die Blende 15 auch einstückig mit der Mittelkonsole 2 bzw. der Behälteraufnahme 3 sein, wenn der lösbare Boden 5 und vor allem die federnden Bögen 10 aus entsprechendem Material, beispielsweise ein thermoplastisches Elastomer, geformt ist. Die Haltebacken 9 können in diesem Fall so weit nach innen gebogen werden, dass der Boden 5 entnommen und wieder eingefügt werden kann.

Weiterhin kann eine zusätzliche Verrastung des Bodens 5 an der Behälteraufnahme 3 vorgesehen sein (nicht dargestellt), um ein teilweises Herausheben des Bodens 5 beim Herausnehmen besonders durchmesserstarker Getränkebehälter zu vermeiden.

**Bezugszeichenliste**

| **Halter für einen Getränkebehälter** | |
|---|---|
| 1 | Halter |
| 2 | Mittelkonsole |
| 3 | Behälteraufnahme |
| 4 | fester Boden |
| 5 | lösbarer Boden |
| 6 | Rand |
| 7 | Tropfwanne |
| 8 | Federelement |
| 9 | Haltebacke |
| 10 | federnder Bogen |
| 11 | Abdrückfläche |
| 12 | Nut |
| 13 | Umfangswand |
| 14 | Nutgrund |
| 15 | Blende |

## Patentansprüche

1. Halter für einen Getränkebehälter, mit einer Behälteraufnahme (3), in die der Getränkebehälter von oben einstellbar ist, und mit einem an der Behälteraufnahme (3) angeordneten Boden (5), der eine Stellfläche für den Getränkebehälter bildet, wobei an der Behälteraufnahme (3) mindestens eine nach innen federnde Haltebacke (9) angeordnet ist, die nach außen wegdrückbar ist, **dadurch gekennzeichnet, dass** die mindestens eine Haltebacke (9) einstückig mit dem Boden (5) der Behälteraufnahme (3) ist, der als gesondertes Bauteil lösbar an der Behälteraufnahme (3) angeordnet ist, derart, dass der Boden (5) gemeinsam mit der Haltebacke (9) nach oben aus der Behälteraufnahme (3) entnehmbar ist.

2. Halter nach Anspruch 1, **dadurch gekennzeichnet, dass** der Halter (1) mehrere über den Umfang verteilt angeordnete Haltebacken (9) aufweist.

3. Halter nach Anspruch 1, **dadurch gekennzeichnet, dass** der Boden (5) eine Tropfwanne (7) aufweist.

4. Halter nach Anspruch 1, **dadurch gekennzeichnet, dass** der Boden (5) ein in einem Umfangsbereich der Behälteraufnahme (3) nach oben stehendes Federelement (8) aufweist, das einstückig mit dem Boden (5) ist und mit dem die Haltebacke (9) einstückig ist.

5. Halter nach Anspruch 1, **dadurch gekennzeichnet, dass** die Haltebacke (9) ein Federelement (8) aufweist, das sich nach außen an der Behälteraufnahme (3) abstützt.

6. Halter nach Anspruch 1, **dadurch gekennzeichnet, dass** die Haltebacke (9) ein Federelement (8) mit einem federnden Bogen (10) aufweist.

## Claims

1. Holder for a drinks container, having a container receptacle (3) into which the drinks container is insertable from above, and having a base (5) which is arranged on the container receptacle (3) and forms a support surface for the drinks container, there being arranged on the container receptacle (3) at least one holding jaw (9) which is biased resiliently inwards and which can be pressed away towards the outside, **characterised in that** the at least one holding jaw (9) is integral with the base (5) of the container receptacle (3), which base is detachably arranged as a separate component on the container receptacle (3) in such a way that the base (5), together with the holding jaw (9), is removable upwards from the container receptacle (3).

2. Holder according to claim 1, **characterised in that** the holder (1) has a plurality of holding jaws (9) distributed around the periphery.

3. Holder according to claim 1, **characterised in that** the base (5) has a drip tray (7).

4. Holder according to claim 1, **characterised in that** the base (5) has a resilient element (8) extending upwards in a peripheral region of the container receptacle (3), which resilient element is integral with the base (5) and integral with the holding jaw (9).

5. Holder according to claim 1, **characterised in that** the holding jaw (9) has a resilient element (8) which is supported towards the outside against the container receptacle (3).

6. Holder according to claim 1, **characterised in that** the holding jaw (9) has a resilient element (8) having a resilient arcuate portion (10).

## Revendications

1. Support destiné à un réceptacle de boissons, comprenant un logement (3) dans lequel ledit réceptacle de boissons peut être inséré de haut en bas, et un fond (5) qui est disposé au niveau dudit logement (3) du réceptacle et forme une surface d'appui dévolue audit réceptacle de boissons, au moins un mors de retenue (9), doué d'élasticité vers l'intérieur et pouvant être repoussé vers l'extérieur, étant situé au niveau dudit logement (3) du réceptacle, **caractérisé par le fait que** le mors de retenue (9), à présence minimale, forme un seul tenant avec le fond (5) du logement (3) du réceptacle qui est implanté de manière libérable au niveau dudit logement (3) du réceptacle, en tant que pièce structurelle distincte, de telle sorte que ledit fond (5) puisse être dissocié de bas en haut d'avec ledit logement (3) du réceptacle, conjointement audit mors de retenue (9).

2. Support selon la revendication 1, **caractérisé par le fait que** ledit support (1) compte plusieurs mors de retenue (9) agencés avec répartition sur le pourtour.

3. Support selon la revendication 1, **caractérisé par le fait que** le fond (5) présente une cuvette (7) de recueil de gouttes.

4. Support selon la revendication 1, **caractérisé par le fait que** le fond (5) comporte un élément élastique (8) qui se dresse vers le haut dans une région du pourtour du logement (3) du réceptacle, forme un seul tenant avec ledit fond (5), et avec lequel le mors de retenue (9) forme un seul tenant.

5. Support selon la revendication 1, **caractérisé par le fait que** le mors de retenue (9) présente un élément élastique (8) prenant appui, vers l'extérieur, contre le logement (3) du réceptacle.

6. Support selon la revendication 1, **caractérisé par le fait que** le mors de retenue (9) comporte un élément élastique (8) muni d'une anse (10) douée d'élasticité.
